# EUROPÄISCHE PATENTSCHRIFT

(11) **EP 3 496 655 B1**
(45) Veröffentlichungstag und Bekanntmachung des Hinweises auf die Patenterteilung: **06.04.2022**
(21) Anmeldenummer: 17749451.5
(22) Anmeldetag: 08.08.2017
(51) Int. Cl.: A61C 13/00, A61C 13/01, A61C 13/08, A61C 13/10

(54) **VERFAHREN ZUR ERZEUGUNG EINER PROTHESE ODER TEILPROTHESE**
METHOD FOR PRODUCING A PROSTHESIS OR PARTIAL PROSTHESIS
PROCÉDÉ POUR PRODUIRE UNE PROTHÈSE OU UNE PROTHÈSE PARTIELLE

(30) Priorität: 10.08.2016 DE 102016114825
(43) Veröffentlichungstag der Anmeldung: 19.06.2019
(60) Teilanmeldung: 19190209.7
(73) Patentinhaber: Ivoclar Vivadent AG, 9494 Schaan (LI)
(72) Erfinder: FAUST, Alexander, 9442 Berneck (CH); MUHMENTHALER, Philipp, 4102 Binningen (CH)
(74) Vertreter: Baronetzky, Klaus
(86) Internationale Anmeldenummer: PCT/EP2017/070001
(87) Internationale Veröffentlichungsnummer: WO 2018/029163

(56) Entgegenhaltungen:
- EP-A1- 2 742 907
- WO-A1-2013/124452
- WO-A1-2015/055790
- WO-A1-2016/041937
- DE-A1-102013 003 913
- JP-A- 2015 136 520
- US-A1- 2014 080 094

## Beschreibung

Die Erfindung betrifft ein Verfahren zur Erzeugung einer Prothese oder Teilprothese, gemäß dem Oberbegriff des Anspruchs 1, sowie ein Zwischenprodukt einer herzustellenden Prothese, gemäß dem Oberbegriff von Anspruch 16.

Für die Erzeugung einer Prothese oder Teilprothese ist es bekannt, die Prothese mit der Prothesenbasis aus einem Kunststoffteil zu fräsen. Dies geschieht in an sich bekannter Weise, beispielsweise basierend auf dem "Digital Denture"-Verfahren, wie es dem Grunde nach aus der EP1 832 245 B1 bekanntgeworden ist.

Nachteilig ist, dass der Gingivasaum nicht zu 100 % reproduzierbar ist und dass zwei Ebenen aufeinander liegen. Es muss hier einer mathematisch starren Linie gefolgt werden.

Die Prothesenbasis wird hierbei typischerweise aus einem Kunststoffmaterial gefräst, wobei dann auch gleich die Zahnausnehmungen mitgefräst werden.

Die Zähne können ihrerseits ebenfalls gefräst werden und hierbei aus einem beliebigen geeigneten Material bestehen, wie zum Beispiel aus Komposit oder aus Keramik. Alternativ können auch fertig konfektionierte Zähne eingesetzt werden; in diesem Fall werden die Zahnausnehmungen an die Basalform der Zähne angepasst.

Aus der EP 2 742 907 A1 ist eine Verbesserung der Integration der Zähne in die Prothesenbasis ersichtlich, die einen erheblichen Fortschritt gegenüber den zuvor bekannten Lösungen darstellt.

Die Zähne können entweder als Einzelzähne realisiert sein, oder aber als Zahnbogen, bei welchem die benachbarten Zähne über eine Einschnürung einstückig miteinander verbunden sind.

Wenn Einzelzähne verwendet werden, ist es günstig, auf die aus der WO 2015/055790 A1 bekannte Transferschablone zurückzugreifen.

Die Verbindung zwischen den Zähnen und der Prothesenbasis muss jedenfalls fest und insbesondere dauerhaltbar sein. Es kann eine beliebige geeignete Fügemasse oder Verbundmasse verwendet werden, auch beispielsweise ein Klebstoff. Der vorgegebene Spalt zwischen den Zähnen und der Prothesenbasis für die Verbundmasse lässt sich in weiten Bereichen an die Verbundmasse und die sonstigen Erfordernisse anpassen, indem er per CAD entsprechend ausgelegt wird. Typischerweise beträgt die Stärke zwischen 80 um und 200 um, in der Regel etwa 100 µm .

Es muss sichergestellt sein, dass die vor dem Einbringen der Zähne in die Zahnausnehmungen eingebrachte Verbundmasse ausreicht, den Klebespalt vollständig auszufüllen.

Dies ist kritisch, denn ein unvollständig ausgefüllter Klebespalt könnte dazu führen, dass die Verbindung zwischen Zahn und Zahnausnehmung verloren geht, abgesehen davon, dass eine dann verbleibende Ausnehmung praktisch nicht keimfrei zu halten ist.

Daher wird üblicherweise mit Verbundmassenüberschuss gearbeitet, der dann aus der Klebefuge hinaus quillt und im Nachhinein entfernt werden muss.

Der unregelmäßig herausgequollene Klebstoffrest oder Verbundmassenrest wird dann typischerweise manuell eliminiert. Das manuelle Bearbeiten mittels eines Handfräsers ist jedoch nicht nur aufwendig, sondern erzeugt auch häufig Ungenauigkeiten zwischen Design und reeller Prothese, verbunden mit Einbussen an der Oberfläche, gerade im Bereich des Gingivasaumes. Aufgrund der dreidimensionalen Ausgestaltung der Saumlinie wird diese punktuell oder in Teilen verschoben, wenn beispielsweise der Zahntechniker an einer Stelle zu viel Material abträgt, was bei der manuellen Nachbearbeitung ohne weiteres geschehen kann.

Wenn andererseits der Zahntechniker - beim Versuch, den Zahnfleischsaum nicht zu verletzen -, zu vorsichtig agiert, bleibt ein Fügematerialüberschuss bestehen, was ebenfalls ästhetisch unbefriedigend ist.

Aus WO2016/041937 ist ein weiteres Verfahren zur Herstellung einer Dentalprothese bekannt.

Ferner ist es bereits vorgeschlagen worden, unspezifisch einen Materialüberschuss bei einem Rapid-Prototyping-Verfahren bereitzustellen, und diesen im Nachhinein zu entfernen. Hiermit gehen jedoch die gleichen Probleme wie vorstehend genannt einher, so dass sich dieses Verfahren nicht durchgesetzt hat.

Demgegenüber liegt der Erfindung die Aufgabe zugrunde, ein Verfahren zur Erzeugung einer Prothese oder Teilprothese gemäß dem Oberbegriff des Anspruchs 1 sowie ein Zwischenprodukt einer herzustellenden Prothese gemäß dem Oberbegriff von Anspruch 16 zu schaffen, die hinsichtlich der Herstellung der Prothese weiter verbessert sind, wobei es insbesondere hinsichtlich der Effizienz bei der Herstellung, aber auch hinsichtlich des ästhetischen Ergebnises deutliche Fortschritte mit sich bringen soll.

Diese Aufgabe wird erfindungsgemäß durch die Ansprüche 1 und 16 gelöst. Vorteilhafte Weiterbildungen ergeben sich aus den Unteransprüchen.

Erfindungsgemäß ist es vorgesehen, im Bereich der Verbindung zwischen Zähnen und Prothesenbasis ein Aufmaß gegenüber dem Originalmaß virtuell zu erzeugen. Per CAD wird kurzerhand das Aufmaß von beispielsweise 0,2 mm der Außenform der Zähne und/oder der Prothesenbasis zugeschlagen, und zwar z. B. im Bereich mindestens oberhalb und unterhalb des Zahnfleischsaums, beispielsweise über eine Höhe von 10mm. Das Aufmaß wird nicht an den Stellen bereitgestellt, an denen die Zähne und die Prothesenbasis miteinander verfugt oder verbunden sind oder einander berühren, sondern nur außerhalb dieser Bereiche. Der Fügespalt bleibt so in der aus dem Stand der Technik bekannten Weise erhalten, wobei die Zahnausnehmung reichlich mit Verbundmasse gefüllt wird, so dass sichergestellt ist, dass der Fügespalt nach dem Einbringen der Zähne reichlich mit Fügemasse oder Verbundmasse gefüllt ist, so dass insofern keine Luftspalte mehr bestehen. Beim Entfernen des Aufmaßes ergibt sich der besondere Vorteil, dass gleichsam automatisch die Fügemasse bzw. Verbundmasse, soweit sie als Überschuss vorliegt, mit entfernt wird.

Ein bislang erforderlicher aufwendigerer und manueller Schritt, der zudem fehlerbehaftet war, kann damit entfallen.

Das Einsetzen der Zähne in die Zahnausnehmungen kann im Falle eines einstückigen Zahnbogens, bei dem die mesialen und distalen Seiten der Zähne über Einschnürungen miteinander verbunden sind, von Hand erfolgen, oder aber auch über eine Transferschablone gemäß der WO 2015/055790 A1.

Das Verbundmaterial wird dann ausgehärtet, wozu beispielsweise eine an sich bekannte Einspannvorrichtung verwendet werden kann, oder auch eine beliebige andere Einrichtung, über welche der gewünschte Anpressdruck zwischen den Zähnen und der Prothesenbasis aufrecht gehalten werden kann, um eine sichere Aushärtung der Verbundmasse zu gewährleisten.

Anschließend an die Aushärtung ist es gemäß der bevorzugten Ausgestaltung des erfindungsgemäßen Verfahrens vorgesehen, die nunmehr mit Zähnen bestückte Prothesenbasis wieder in die Fräsvorrichtung einzuspannen. Der nunmehr erhärtete Überschuss aus Verbundmasse, der auch als Klebstoffüberschuss bezeichnet werden kann, wird weggefräst, zusammen mit dem Aufmaß der Zähne und/oder der Prothesenbasis, so dass sowohl der Zahnfleischsaum als auch die Zähne als auch die Prothesenbasis im Originalmaß vorliegen.

In einer modifizierten Ausgestaltung, die die Wiedereinspann-Ungenauigkeit auf null reduziert, ist es vorgesehen, die Bestückung mit dem Zahnbogen, dem Klebstoffauftrag und die Bestückung mit dem Zahnbogen in der Fräsmaschine im in dem Werkstückhalter eingespannten Zustand der Prothesenbasis vorzusehen.

Dies kann ohne weiteres durch die offene Tür der ausgeschalteten Fräsmaschine erfolgen, wobei es sich versteht, dass es günstig ist, auch hier eine entsprechende Spannvorrichtung einzusetzen, die den Zahnbogen mit dem basalen Bereich der Zähne in die Zahnausnehmungen drückt.

Nach Aushärtung des Klebstoffs wird das Aufmaß von beispielsweise 0,3 mm abgetragen, so dass Zähne, Prothesenbasis und Zahnfleischsaum oder Gingivasaum je im Originalmaß vorliegen.

Erfindungsgemäß ist es besonders günstig, dass durch die maschinelle Entfernung des Klebstoffüberschusses der kettenlinienförmige Gingivasaum exakt wie mit Hilfe des CAD Programms designed vorliegen kann, so dass das ästhetische Ergebnis der Prothese erheblich verbessert ist.

Erfindungsgemäß ist es auch günstig, dass gegenüber der manuellen Entfernung von Klebstoffüberschuss erhebliche Zeiteinsparungen möglich sind. So lässt sich das Aufmaß und der Klebstoffüberschuss per Fräsen in kurzer Zeit, beispielsweise in drei Minuten entfernen, während bei manueller Entfernung durchaus 30 oder 40 Minuten zu veranschlagen waren.

Das Aufmaß muss nicht unbedingt sowohl an der Prothesenbasis als auch an den Zähnen vorgesehen sein.

Es ist beispielsweise auch möglich, konfektionierte Zähne in Standardgröße, also ohne Aufmaß, zu verwenden, und die Prothesenbasis mit einem Aufmaß von beispielsweise 0,15 mm zu fertigen. Dennoch kann das Versäubern und Entfernen der Klebstoffreste in günstiger Weise rasch und maschinell erfolgen.

Der Bereich anschließend an den Gingivasaum ist hierbei bevorzugt frei von Aufmaß, also im Originalmaß. In diesem Übergangsbereich, der beispielsweise 1 mm oder 2 mm hoch sein kann, sammelt sich ein großer Teil des Klebstoffüberschusses an, so dass er sich leichter entfernen lässt.

Erfindungsgemäß besonders günstig ist es auch, dass durch die Realisierung eines Zahnaufmaßes und das anschließende Fräsen auf Originalmaß die Klebeungenauigkeit bei fehlender Transferschablone kompensiert werden kann. Die Zähne oder der Zahnbogen können insofern auch ohne Transferschablone in die Zahnausnehmungen eingedrückt werden, und nach dem Aushärten erfolgt trotzdem eine präzise Realisierung des Originalmaßes der Zähne, aufgrund des zweiten Frässchritts.

Die Erfindung ist nicht auf die Verwendung von Einzelzähnen beschränkt. Anstelle von Einzelzähnen können auch Zahnsegmente oder Zahnbögen verwendet werden, wobei die Zahnsegmente einteilig oder mehrteilig sein können. Beispielsweise kann eine Vollprothese, die für 14 Zähne bestimmt ist, in drei Teile mit zwei Trios und einem 8er-Zahnbogen realsiert werden (3+3+8). Die Erfindung ist insofern nicht auf die Art der Teilung der Zähne, der Zahnsegmente oder der Zahnbögen beschränkt.

Wenn lediglich die Zähne im Aufmaß vorgesehen sind, muss lediglich dort - und natürlich im Bereich des Zahnfleischsaumes - ein Fräsen erfolgen. Dies ist besonders zeitsparend, insbesondere, wenn gut fräsbare Komposit-Zähne verwendet werden.

In einer modifizierten Ausgestaltung ist es vorgesehen, dass nur ein definierter Bereich mit einer Höhe von beispielsweise 10 mm anschließend an den Zahnfleischsaum, also oberhalb und unterhalb des Zahnfleischsaums, mit Aufmaß gefertigt wird und beim zweiten Fräsen auf Originalmaß abgefräst wird. Bei dieser Lösung wird dann lediglich dieser Bereich mit der Fräsmaschine nochmals abgefahren und auf Originalmaß gefräst.

Bei dieser Lösung lässt sich auch ein ganz geringes virtuelles Aufmaß von lediglich 0,05 oder 0,1 mm realisieren. Der Zahn mit Aufmaß unterscheidet sich dann nur um eine ganz geringe Dicke von dem Zahn mit Originalmaß.

In einer weiteren modifizierten Ausgestaltung ist es vorgesehen, übliche Zähne und eine übliche Prothesenbasis, die in übliche Weise eingeklebt sind, nochmals auf das Originalmaß zu fräsen. Das Fräsen kann hier beschränkt sein beispielsweise auf ein Band mit 6 mm auf der Prothesenbasis und 4 mm auf der Zahnfläche. Dies ist ausgesprochen zeitsparend. Jedoch ist eine eigene Frässtrategie erforderlich, mit der ein Verletzen des Zahns vermieden werden soll.

Erfindungsgemäß ist es besonders günstig, dass der Fügematerialüberschuss automatisch in einem Schritt mitentfernt wird. Hierdurch ergibt sich eine bessere Qualität und verbesserte Erscheinung des Bereichs des Gingivasaums, und zudem ergibt sich eine erhebliche Zeitersparnis.

Es versteht sich, dass das Aufmaß, also die zusätzlich aufgebrachte Schichtdicke, um welche sich der Zahn und/oder die Prothesenbasis von dem Originalmaß unterscheidet, in weiten Bereichen an die Erfordernisse anpassbar ist. Beispielsweise ist eine Stärke im Submilimeterbereich möglich, insbesondere zwischen 0,05 und 0,8mm, bevorzugt etwa 0,3 mm. Das Aufmaß kann eine konstante Schichtstärke sein, aber es ist auch möglich, das Aufmaß mit einer ungleichen Schichtstärke zu realisieren.

Wenn dies der Fall ist, kann das Aufmaß beispielsweise im Okklusal- bzw. Inzisalbereich größer gewählt sein. Grund ist die geometrische Auswirkung einer etwaigen "Verkantung" des Zahns in der Zahnausnehmung, wenn der Zahn ohne Transferschablone in die Zahnausnehmung eingebettet wird.

Eine Schrägstellung in der Zahnausnehmung wirkt sich dann so aus, dass die Schrägstellung im Berührungsbereich zwischen Prothese und Zahn, also im Basalbereich, am geringsten ist und im von dem Basalbereich entfernten Bereich des Zahns am größten. Dies ist aber der Inzisal- bzw. Okklusalbereich.

Dies kann mit einer entsprechenden virtuellen Korrektur berücksichtigt werden, so dass das Aufmaß im Bereich des Zahnfleischsaums am geringsten ist. Bevorzugt ist der unmittelbar dem Zahnfleischsaum benachbarte Bereich ohnehin frei von Aufmaß. Dort liegt damit sowohl der Zahn als auch die Prothese im Originalmaß vor, beispielsweise in einem Band von 1 mm Höhe, das den Zahnfleischsaum umgibt.

Das Aufmaß an der Prothesenbasis ist nicht unmittelbar korreliert mit dem Aufmaß an den Zähnen. Wenn es bei der transferschablonenfreien Aufstellung lediglich darum geht, Zahnstellungsfehler zu kompensieren, kann die Prothesenbasis im Originalmaß, also frei von Aufmaß gefertigt werden, und die Zähne können mit Aufmaß gefertigt werden. Wenn es darum geht, lediglich den Klebeüberschuss zu beseitigen, kann auch in einer modifizierten Ausgestaltung das Aufmaß an den Zähnen reduziert werden, bis auf 0 oder nahe 0.

Die Fräsvorrichtung wird dann so eingestellt, dass beim zweiten Fräsen erneut das Originalmaß abgefahren wird, wobei es sich versteht, dass dann dafür Sorge getragen werden muss, dass ein an sich bereits in Originalmaß vorliegender Zahn nicht verletzt wird. Bei Verwendung von Konfektionszähnen liegen diese typischerweise im Originalmaß vor. Die Aufmaßentfernung kann sich dann auf die Prothesenbasis und den Klebstoffüberschuss reduzieren; insofern können Wiedereinspann-Fehler oder Wiedereinspann-Ungenauigkeiten auch im Nachhinein korrigiert werden. Wichtig ist jedenfalls die Entfernung des Überschusses an Fügematerial.

Als Fügematerial kann ein beliebiges geeignetes Material verwendet werden, dass geeignet ist, den Spalt zwischen Zahnausnehmung und Zahn im Basalbereich zu füllen. Typischerweise werden hier an sich bekannte Zahnklebstoffe verwendet, die aus dem Klebespalt herausquellen, wobei der Überschuss nach Aushärtung durch Fräsen entfernt wird.

Der aufmaßfreie Bereich, der sich an den Zahnfleischsaum anschließt, wird hier als Übergangsbereich bezeichnet. Dieser kann auch vollständig mit Klebstoffüberschuss ausgefüllt sein, so dass sich per Fräsen in günstiger Weise in einem Zug das Aufmaß und der Klebstoffüberschuss entfernen lässt.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht der virtuellen Überführung eines Zahns in der Prothesenbasis im Originalmaß in einen Zahn in der Prothesenbasis mit dem erfindungsgemäßen Aufmaß, das wieder auf das Originalmaß reduziert wird.
- Fig. 2: eine Detaildarstellung der Realisierung des Aufmaßes gemäß Fig. 1; und
- Fig. 3: eine schematische Darstellung der Entfernung des Aufmaßes bzw. des Fügemassenüberschusses für ein erfindungsgemäßes Verfahren in der Ausführungsform gemäß den Fig. 1 und 2.

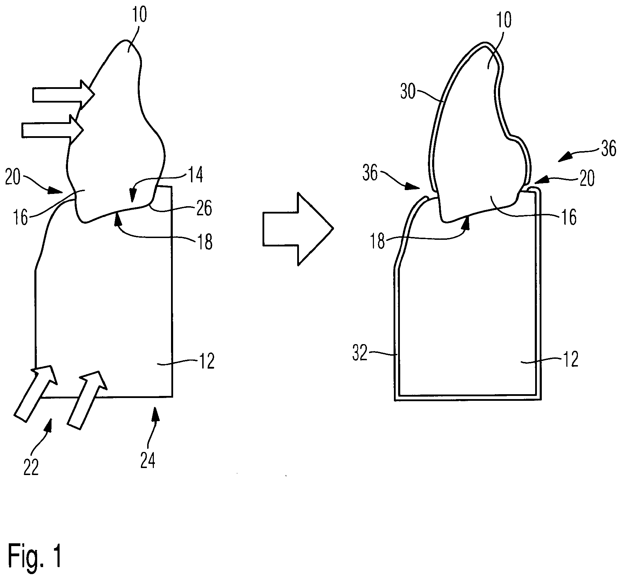

Mit dem erfindungsgemäßen Verfahren wird eine Prothese hergestellt, die aus in Fig. 1 schematisch dargestellten Zähnen 10 und der ebenfalls schematisch dargestellten Prothesenbasis 12 besteht.

Für die Aufnahme der Zähne weist die Prothesenbasis je eine Zahnausnehmung 14 auf, wobei ein gingivaler Bereich 16 des Zahns 10 je in der Zahnausnehmung aufgenommen ist. In an sich bekannter Weise weist jeder Zahn eine im wesentlichen flache, leicht konkav geformte Basalfläche 18 auf, und die Zahnausnehmung 14 ist dort entsprechend geformt.

Der Übergang zwischen dem Zahn 10 und der Prothesenbasis 12 wird typischerweise als Zahnfleischsaum oder Gingivasaum 20 bezeichnet. Er liegt sowohl an der vestibulären Seite 22 als auch an der oralen Seite 24 vor. Aus vestibulärer Sicht betrachtet bildet der Zahnfleischsaum in an sich bekannter Weise eine Kettenlinie und stellt im Mund des Patienten, insbesondere im Frontzahnbereich, einen markanten Rot/Weiß-Übergang dar.

In dem in Fig. 1 dargestellten virtuellen Modells eines Zahn 10 mit Prothesenbasis 12 ist ein Spalt 26 am Übergang zwischen diesen beiden vorgesehen. Dieser Spalt ist dafür bestimmt, später mit Fügemasse oder auch Klebstoff ausgefüllt zu werden. Beim Andrücken des weichen Klebstoffs wird dieser aus dem Spalt 26 herausgedrückt und fließt in den Bereich des Zahnfleischsaums 20.

Fig. 1 zeigt jedoch zunächst das virtuelle Modell dieses Zahns 10 mit der Prothesenbasis 12 in dem hier relevanten Teil. Diese liegen im links dargestellten Teil von Fig. 1 im Originalmaß vor.

Demgegenüber ist es im rechts dargestellten Teil von Fig. 1 vorgesehen, dass sowohl der Zahn 10 ein Aufmaß 30 als auch die Prothesenbasis 12 ein Aufmaß 32 aufweist. Dieses wird virtuell per CAD erzeugt und stellt gegenüber dem Originalmaß eine Volumenvergrößerung mit konstanter Schichtdicke dar.

Der Übergangsbereich 36 zwischen dem Zahn 10 und der Prothesenbasis 12 ist jedoch frei von Aufmaß 30 bzw 32. Der Gingivasaum 20 liegt insofern also frei, ist jedoch von dem aus Fig. 1 nicht ersichtlichen Klebstoffüberschuss bedeckt, wenn das per CAD virtuelle Modell durch Fräsen tatsächlich hergestellt wird.

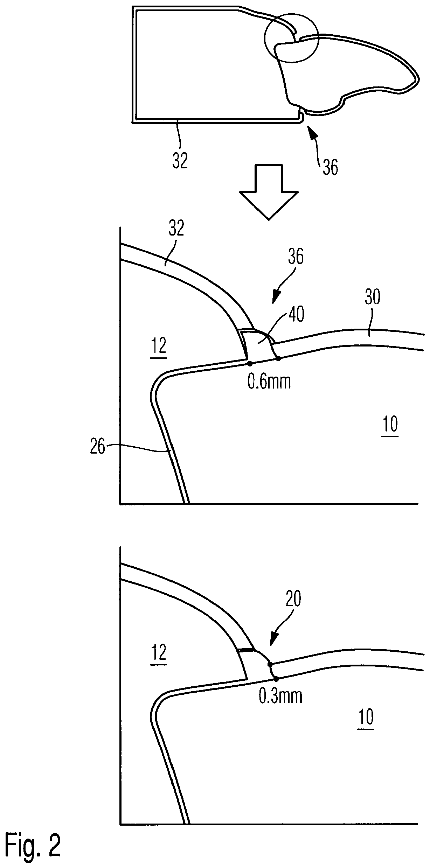

Aus Fig. 2 ist ersichtlich, in welcher Weise sich dieser Klebstoffüberschuss darstellt. Fig. 2 zeigt oben zunächst die rechte Abbildung in Fig. 1 und dann in der Mitte einen vergrößerten Ausschnitt aus dieser. Gleiche Bezugszeichen weisen hier wie auch in den weiteren Figuren auf gleiche Teile hin. Der Spalt 26 ist vollständig mit Klebstoff gefüllt. Der Klebstoff quillt jedoch seitlich aus dem Spalt 26 heraus und bildet dort einen Überschuss 40 an Klebstoff oder Fügemasse.

Im dargestellten Ausführungsbeispiel füllt dieser Klebstoffüberschuss 40 den Übergangsbereich 36 vollständig aus, so dass sich das Aufmaß 32 mehr oder weniger nahtlos über den Klebstoffüberschuss an das Aufmaß 30 anschließt.

In Fig. 2 sind auch mögliche Bemaßungen für den Übergangsbereich 36 und die Stärke des Aufmaßes dort eingetragen, wobei der Übergangsbereich etwa 0,6 mm hoch ist, gerechnet vom Zahnfleischsaum 20, und zwar beidseitig, insgesamt also 1,2 mm, und wobei die Schichtstärke des Aufmaßes 30, aber auch diejenige des Aufmaßes 32, etwa 0,3 mm beträgt.

Es versteht sich, dass der Überschuss 40 als typische Klebewulst sich über den Verlauf des Gingivasaums 20 ändert und mal dicker und mal weniger dick ist.

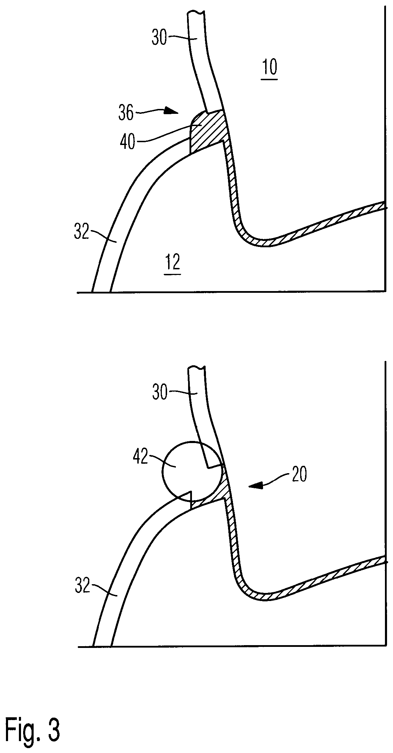

Erfindungsgemäß wird nun gemäß Fig. 3 nicht nur der Überschuss 40, sondern auch das Aufmaß 32 und das Aufmaß 30 von dem Übergangsbereich 36, der Prothesenbasis 12 und dem Zahn 10 entfernt. Hierzu dient ein Fräser 42, dessen Radius so gering bemessen ist, dass er gut der Kontur des Gingiva saumes 20 folgen kann, so dass der Gingivasaum 20 als Kettenlinie präzise herausgearbeitet ist und sich in ästhetisch gelungener Weise dem Betrachter darbietet.

Es versteht sich, dass das Aufmaß 30 und das Aufmaß 32, also das zugehörige Zusatzmaterial, dass je durch den Erstfräsvorgang belassen wurde, in einem Schritt entfernt wird.

Es versteht sich auch, dass je nach Fräser, der während des Erstfrässchritts verwendet wird, ein Werkzeugwechsel vorgenommen werden kann, indem nämlich speziell für den zweiten Frässchritt ein Fräser mit einem geringeren Durchmessers verwendet wird.

Das erfindungsgemäße Zwischenprodukt einer herzustellenden Prothese zeichnet sich durch eine hohe Präzision ohne Aufstellfehler der Zähne aus, und zwar auch dann, wenn keine Transferschablone für das Aufstellen verwendet wird, wobei dennoch ein ästhetisch besonders gelungenes Ergebnis vorliegt.

## Patentansprüche

1. Verfahren zur Erzeugung einer Prothese oder Teilprothese basierend auf digitalen Daten, unter Verwendung von mehreren Zähnen und einer herzustellenden Prothesenbasis, **dadurch gekennzeichnet, dass** die generativ oder subtraktiv erzeugten Zähne und/oder die generativ oder subtraktiv erzeugte Prothesenbasis (12), mit Aufmaß gefertigt werden, abgesehen von Bereichen der Zähne (10) und der Prothesenbasis (12), an welchen die Zähne (10) und die Prothesenbasis (12) aneinander anliegen und mit Füge- oder Verbundmasseüberschuss miteinander verfügt oder verbunden werden, wobei per CAD das Aufmaß der Außenform der Zähne und/oder der Prothesenbasis zugeschlagen wird und ein Übergangsbereich, anschließend an den Gingivasaum, frei von Aufmass ist und dass ein Füllen der Zahnausnehmungen mit Verbundmasse, ein Einsetzen der Zähne und ein Aushärten der Verbundmasse erfolgt und dass anschließend an die Aushärtung der Verbundmasse, die Zähne (10) und/oder die Prothesenbasis (12) unter Entfernung des Aufmaßes (30, 32) zusammen mit dem Überschuss an Füge- oder Verbundmasse im Bereich des gingivalen Saums (20), auf das gewünschte Originalmaß, also frei von Aufmaß, gebracht werden, insbesondere gefräst werden.

2. Verfahren nach Anspruch 1, **dadurch gekennzeichnet, dass** das Aufmaß (30, 32) kleiner als, die Stärke der Fügemasse oder Verbundmasse zwischen Prothesenbasis (12) und Zähnen (10) ist.

3. Verfahren nach Anspruch 1, **dadurch gekennzeichnet, dass** das Aufmaß (30, 32) gleichgroß oder größer als, insbesondere dreimal so groß wie, die Stärke der Fügemasse oder Verbundmasse zwischen Prothesenbasis (12) und Zähnen (10) ist.

4. Verfahren nach einem der vorhergehenden Ansprüche, **dadurch gekennzeichnet, dass** ein Randbereich der Fügemasse oder Verbundmasse , der diese Fügemasse oder Verbundmasse umgibt und den Zahnfleischsaum (20) bildet, frei von dem Aufmaß ist.

5. Verfahren nach einem der vorhergehenden Ansprüche, **dadurch gekennzeichnet, dass** das Aufmaß (30, 32) an der Prothesenbasis (12) kleiner als das Aufmaß (30, 32) an den Zähnen (10) ist.

6. Verfahren nach einem der Ansprüche 1-4 **dadurch gekennzeichnet, dass** das Aufmaß (30, 32) an der Prothesenbasis (12) gleichgroß wie oder größer als das Aufmaß (30, 32) an den Zähnen (10) ist.

7. Verfahren nach einem der vorhergehenden Ansprüche, **dadurch gekennzeichnet, dass** die Zähne(10) als Zahnbogen oder als Zahnsegment gemeinsam gefertigt werden und zur Prothesenbasis (12) hin, in der Ansicht aus vestibulärer Richtung, eine Kettenlinie bilden, die sich insbesondere unterhalb des Zahnfleischsaums (20) erstreckt.

8. Verfahren nach einem der vorhergehenden Ansprüche, **dadurch gekennzeichnet, dass** das Aufmaß subtraktiv entfernt wird, insbesondere zusammen mit einem Fügematerial-/Verbundmaterialüberschuss und besonders bevorzugt durch Fräsen per CAM.

9. Verfahren zur Erzeugung einer Prothese oder Teilprothese basierend auf digitalen Daten, unter Verwendung von mehreren Zähnen (10) und einer herzustellenden Prothesenbasis (12), **dadurch gekennzeichnet, dass** die Zähne im Originalmaß als Konfektionszähne gefertigt sind und die Prothesenbasis (12) mit einem Aufmaß gefertigt wird und und das Aufmaß (30, 32) zusammen mit einem Fügematerial-/Verbundmaterialüberschuss am Zahnfleischsaum (20) oder Gingivalsaums (20) entfernt wird.

10. Verfahren nach einem der vorhergehenden Ansprüche, **dadurch gekennzeichnet, dass** das Aufmaß (30, 32) an der Prothesenbasis (12) im Wesentlichen eine gleiche Stärke aufweist, insbesondere zwischen 0,05 und 0,8mm, besonders bevorzugt zwischen 0,1 und 0,5mm.

11. Verfahren nach einem der vorhergehenden Ansprüche, **dadurch gekennzeichnet, dass** die Prothesenbasis (12) durch ein Fräsverfahren gefertigt wird, und das Aufmaß an der Prothesenbasis (12), insbesondere zusammen mit dem Fügematerial-/Verbundmaterialüberschuss im Bereich des gingivalen Saums (20), in der gleichen Fräsmaschine entfernt wird.

12. Verfahren nach Anspruch 9, **dadurch gekennzeichnet, dass** die Größe des Aufmaßes in Abhängigkeit von einer Wiedereinspann-Genauigkeit der Prothesenbasis (12) in die Fräsmaschine eingestellt ist und insbesondere dieser mit einer Abweichung von weniger als +/- 50 Prozent entspricht.

13. Verfahren nach einem der vorhergehenden Ansprüche, **dadurch gekennzeichnet, dass** das Einsetzen der Zähne (10) in die Zahnausnehmung (14) der Prothesenbasis (12) ungestützt, also ohne Transferschablone, erfolgt und dass das Fräsen auf das Originalmaß, also frei von Aufmaß, zugleich die Füge/Verbundungenauigkeit beseitigt.

14. Verfahren nach einem der vorhergehenden Ansprüche, **dadurch gekennzeichnet, dass** die Zähne(10) , die insbesondere als vorkonfektionierte Zähne (10) vorliegen, im Originalmaß, also frei von Aufmaß, gefertigt werden und die Prothesenbasis (12) mit Aufmaß (30, 31) gefertigt wird und dass das Aufmaß (30, 32), nach dem Fügen oder Verbinden der Zähne (10) mit der Prothesenbasis(12) über eine Transferschablone, entfernt wird.

15. Verfahren nach einem der vorhergehenden Ansprüche, **dadurch gekennzeichnet, dass** die Zähne (10) und/oder die Prothesenbasis (12) mit einem zusätzlichen virtuellen Aufmaß (30, 32) von weniger als 0,2 mm, insbesondere etwa 0,1 mm, hergestellt werden, über welches die Wiedereinspannung-Ungenauigkeit beim Wegfräsen des Aufmaßes (30, 32) kompensiert wird.

16. Zwischenprodukt einer herzustellenden Prothese, mit einer Prothesenbasis (12) und einer Mehrzahl von Zähnen (10), die insbesondere in einem Zahnbogen oder in einem Zahnsegment zusammengefasst sind, wobei die Zähne in Zahnausnehmungen (14) der Prothesenbasis (12) mittels eines Füge/Verbundmasseüberschusses unter Überbrückung einer Füge/Verbundfuge eingeklebt sind, **dadurch gekennzeichnet, dass** mindestens die Prothesenbasis (12), insbesondere auch die Zähne (10), abgesehen von Bereichen der Zähne (10) und der Prothesenbasis (12), an welchen die Zähne (10) und die Prothesenbasis (12) aneinander anliegen und mit Füge- oder Verbundmasseüberschuss miteinander verfügt oder verbunden sind, ein Aufmaß (30, 32) aufweisen, dass zwischen 0,05 und 1,0mm beträgt und welches per abtragendem Verfahren, insbesondere Fräsen, unter Entfernung des Überschusses an Füge- oder Verbundmasse im Bereich des gingivalen Saums (20), auf das Originalmaß, also frei von Aufmaß, als Zielwert entfernbar ist angrenzend an die Füge/Verbundfuge im Bereich des Zahnfleischsaums oder Gingiva-Saums (20) den Füge-/Verbundmasseüberschuss aufweist, an welcher Stelle mindestens die Prothesenbasis (12) und insbesondere auch die Zähne (10) frei von dem Aufmaß (30, 32) sind.

17. Zwischenprodukt einer herzustellenden Prothese nach Anspruch 16, **dadurch gekennzeichnet, dass** der Übergangsbereich (36) zwischen dem Bereich des Aufmaßes (30, 32) der Prothesenbasis (12) und dem Bereich des Aufmaßes (30, 32) der Zähne (10) von dem Füge/Verbundmasseüberschuss ausgefüllt ist.

## Claims

1. A Method for producing a prosthesis or partial prosthesis based on digital data, using a plurality of teeth and a prosthesis base to be produced, **characterized in that** the generatively or subtractively produced teeth and/or the generatively or subtractively produced prosthesis base (12) are produced with an overmeasure, apart from regions of the teeth (10) and the prosthesis base (12) at which the teeth (10) and the prosthesis base (12) abut each other and are provided with or connected to each other using an excess of joining or bonding material, wherein wherein, using CAD, the overmeasure is added to the outer shape of the teeth and/or the denture base, and a transition region, subsequent to the gingival margin, is free of overmeasure and that filling of the tooth recesses with composite material, insertion of the teeth and curing of the composite material will be performed and that subsequent to curing of the composite material, the teeth (10) and/or the denture base (12) are brought, especially milled, to the desired original size, i.e. free of oversize, by removal of the overmeasure (30, 32) and excess of joining or composite material in the region of the gingival margin (20).

2. The method according to claim 1, **characterized in that** the overmeasure (30, 32) is smaller than the thickness of the joining material or composite material between the prosthesis base (12) and the teeth (10).

3. The method according to claim 1, **characterized in that** the overmeasure (30, 32) is equal to or greater than, especially three times greater than the thickness of the joining material or composite material between prosthesis base (12) and teeth (10).

4. The method according to one of the preceding claims, **characterized in that** an edge region of the joining material or composite material surrounding said joining material or composite material and forming the gingival margin (20), is free of the overmeasure.

5. The method according to one of the preceding claims, **characterized in that** the overmeasure (30, 32) at the prosthesis base (12) is smaller than the overmeasure (30, 32) at the teeth (10).

6. The method according to one of the claims 1-4, **characterized in that** the overmeasure (30, 32) at the prosthesis base (12) is equal to or greater than the overmeasure (30, 32) at the teeth (10).

7. The method according to one of the preceding claims, **characterized in that** the teeth (10) are manufactured together as a tooth arch or as a tooth segment and forming a chain line towards the prosthesis base (12), as viewed from the vestibular direction, which chain line extends especially below the gingival margin (20).

8. The method according to one of the preceding claims, **characterized in that** the overmeasure is subtractively removed, especially together with an excess of a joining material/composite material, and especially preferably is removed by CAM milling.

9. A method for producing a prosthesis or a partial prosthesis based on digital data, using a plurality of teeth and a prosthesis base to be produced, **characterized in that** the teeth are manufactured in the original dimension as ready-made teeth and the prosthesis base (12) is manufactured with the overmeasure, and the overmeasure (30, 32) is removed together with the excess of joining material/composite material at the gingival margin (20) or gingival line (20).

10. The method according to one of the preceding claims, **characterized in that** the overmeasure (30, 32) at the prosthesis base (12) substantially has the same thickness, especially between 0.05 and 0.8mm, particularly preferably between 0.1 and 0.5mm.

11. The method according to one of the preceding claims, **characterized in that** the prosthesis base (12) is manufactured by a milling process, and the overmeasure on the prosthesis base (12), is removed in the same milling machine, and especially is removed together with the excess material in the region of the gingival margin (20).

12. The method according to claim 9, **characterized in that** the size of the overmeasure is set in dependence on a reclamping accuracy of the prosthesis base (12) in the milling machine and especially corresponding thereto with a deviation of less than +/- 50%.

13. The method according to one of the preceding claims, **characterized in that** the insertion of the teeth (10) into the tooth recess (14) of the prosthesis base (12) is done unsupported, i.e. without a transfer template, and that milling down to the original dimension, i.e. free of overmeasure, simultaneously eliminates the joining/composite inaccuracy.

14. The method according to one of the preceding claims, **characterized in that** the teeth (10), which are especially present as prefabricated teeth (10), are produced in the original dimension, i.e. free of overmeasure, and the prosthesis base (12) is produced with overmeasure (30, 31), and that the overmeasure (30, 32) is removed after the teeth (10) have been joined or connected to the prosthesis base (12) using a transfer template.

15. The method according to one of the preceding claims, **characterized in that** the teeth (10) and/or the prosthesis base (12) are produced with additional virtual overmeasure (30, 32) of less than 0.2 mm, especially about 0.1 mm, by which the reclamping inaccuracy is compensated for when milling down the overmeasure (30, 32).

16. An intermediate product of a prosthesis to be manufactured, having a prosthesis base (12) and a plurality of teeth (10) which are combined especially in a tooth arch or in a tooth segment, the teeth being bonded into tooth recesses (14) of the prosthesis base (12) using an excess of joining/composite material to bridge a joining/composite joint, **characterized in that** at least the prosthesis base (12), especially also the teeth (10), apart from regions of the teeth (10) and of the prosthesis base (12) at which the teeth (10) and the prosthesis base (12) abut each other and are provided with or connected to each other using an excess of joining or composite material, and having an overmeasure (30, 32) which is between 0.05 and 1.0 mm and which is removable, by a removal process, especially milling, with automatic removal of the excess of joining or composite material in the region of the gingival margin (20), to attain the original dimension, i.e. being free of overmeasure, as a target value and the excess of joining/composite material is present adjacent to the joining/composite joint in the region of the gingival margin or gingival line (20), at which point at least the prosthesis base (12) and especially also the teeth (10) are free of the overmeasure (30, 32).

17. The intermediate product of a prosthesis to be manufactured according to claim 16, **characterized in that** the transition region (36) between the region of the overmeasure (30, 32) of the prosthesis base (12) and the region of the overmeasure (30, 32) of the teeth (10) is filled by the joining/composite material excess.

## Revendications

1. Procédé de production d'une prothèse ou d'une prothèse partielle basé sur des données numériques, en utilisant plusieurs dents et une base de prothèse à produire, **caractérisé en ce que** les dents produites de manière générative ou soustractive et/ou la base de prothèse (12) produite de manière générative ou soustractive sont fabriquées avec une surépaisseur, à l'exception des zones des dents (10) et de la base de prothèse (12) où les dents (10) et la base de prothèse (12) reposent les unes contre les autres et sont disposées ou reliées les unes aux autres avec un excédent de masse d'assemblage ou de masse composite, où la surépaisseur est ajoutée par CAO à la forme extérieure des dents et/ou de la base de prothèse et une zone de transition, à la suite de l'ourlet gingival, est exempte de surépaisseur, et **en ce qu'**un remplissage des évidements dentaires avec de la masse composite, une mise en place des dents et un durcissement de la masse composite ont lieu et **en ce qu'**après le durcissement de la masse composite, les dents (10) et/ou la base de la prothèse (12) sont amenées, en particulier par fraisage, à la dimension originale souhaitée, c'est-à-dire sans surépaisseur, en éliminant la surépaisseur (30, 32) avec l'excédent de masse d'assemblage ou de masse composite dans la zone de l'ourlet gingival (20).

2. Procédé selon la revendication 1, **caractérisé en ce que** la surépaisseur (30, 32) est inférieure à l'épaisseur de la masse d'assemblage ou de la masse composite entre la base de la prothèse (12) et les dents (10).

3. Procédé selon la revendication 1, **caractérisé en ce que** la surépaisseur (30, 32) est égale ou supérieure, en particulier trois fois supérieure, à l'épaisseur de la masse d'assemblage ou de la masse composite entre la base de la prothèse (12) et les dents (10).

4. Procédé selon l'une quelconque des revendications précédentes, **caractérisé en ce qu'**une zone marginale de la masse de scellement ou de la masse composite entourant cette masse de scellement ou cette masse composite et formant le sillon gingival (20) est exempte de la surépaisseur.

5. Procédé selon l'une des revendications précédentes, **caractérisé en ce que** la surépaisseur (30, 32) sur la base de la prothèse (12) est inférieure à la surépaisseur (30, 32) sur les dents (10).sur les dents (10).

6. Procédé selon l'une des revendications 1 à 4, **caractérisé en ce que** la surépaisseur (30, 32) sur la base de la prothèse (12) est égale ou supérieure à la surépaisseur (30, 32) sur les dents (10).

7. Procédé selon l'une des revendications précédentes, **caractérisé en ce que** les dents (10) sont fabriquées ensemble sous forme d'arcade dentaire ou de segment de dents et forment vers la base de la prothèse (12), en vue en direction vestibulaire, une ligne de chaîne qui s'étend en particulier en dessous du sillon gingival (20).

8. Procédé selon l'une des revendications précédentes, **caractérisé en ce que** la surépaisseur est éliminée par voie soustractive, en particulier en même temps qu'un excédent de matériau composite d'assemblage et de manière particulièrement préférée par fraisage par FAO.

9. Procédé de fabrication d'une prothèse ou d'une prothèse partielle sur la base de données numériques, en utilisant plusieurs dents (10) et une base de prothèse (12) à fabriquer, **caractérisé en ce que** les dents sont fabriquées dans la dimension originale en tant que dents de confection et la base de prothèse (12) est fabriquée avec une surépaisseur et la surépaisseur (30, 32) est éliminée en même temps qu'un excédent de matériau d'assemblage/composite au niveau du sillon gingival (20).

10. Procédé selon l'une quelconque des revendications précédentes, **caractérisé en ce que** la surépaisseur (30, 32) à la base de la prothèse (12) présente une épaisseur sensiblement identique, notamment comprise entre 0,05 et 0,8mm, plus préférentiellement entre 0,1 et 0,5mm.

11. Procédé selon l'une des revendications précédentes, **caractérisé en ce que** la base de la prothèse (12) est fabriquée par un procédé de fraisage, et la surépaisseur sur la base de la prothèse (12), en particulier avec l'excédent de matériau d'assemblage/composite dans la zone de l'ourlet gingival (20), est éliminée dans la même fraiseuse.

12. Procédé selon la revendication 9, **caractérisé en ce que** la taille de la surépaisseur est réglée en fonction d'une précision de resserrage de la base de la prothèse (12) dans la fraiseuse et correspond notamment à celle-ci avec un écart inférieur à +/- 50 pour cent.

13. Procédé selon l'une des revendications précédentes, **caractérisé en ce que** l'insertion des dents (10) dans l'évidement dentaire (14) de la base de prothèse (12) s'effectue sans appui, donc sans gabarit de transfert, et **en ce que** le fraisage à la cote d'origine, donc sans surépaisseur, élimine en même temps l'imprécision d'assemblage/de liaison.

14. Procédé selon l'une des revendications précédentes, **caractérisé en ce que** les dents (10), qui se présentent en particulier sous la forme de dents préassemblées (10), sont fabriquées à la dimension originale, c'est-à-dire sans surépaisseur, et la base de la prothèse (12) est fabriquée avec une surépaisseur (30, 31) et **en ce que** la surépaisseur (30, 32) est retirée après l'assemblage ou la liaison des dents (10) avec la base de la prothèse (12) par l'intermédiaire d'un gabarit de transfert.

15. Procédé selon l'une des revendications précédentes, **caractérisé en ce que** les dents (10) et/ou la base de la prothèse (12) sont fabriquées avec une surépaisseur virtuelle supplémentaire (30, 32) inférieure à 0,2 mm, en particulier d'environ 0,1 mm, qui permet de compenser l'imprécision de la remise en tension lors du fraisage de la surépaisseur (30, 32).

16. Produit intermédiaire d'une prothèse à fabriquer, avec une base de prothèse (12) et une pluralité de dents (10), qui sont en particulier réunies en un arc dentaire ou en un segment de dents, où les dents sont collées dans des évidements de dents (14) de la base de prothèse (12) au moyen d'un excédent de masse d'assemblage/composite avec pontage d'un joint d'assemblage/composite, **caractérisé en ce qu'**au moins la base de prothèse (12), en particulier également les dents (10), à l'exception de zones des dents (10) et de la base de prothèse (12) où les dents (10) et la base de prothèse (12) reposent les unes contre les autres et sont disposées ou reliées les unes aux autres avec un excédent de masse d'assemblage ou de masse composite, présentent une surépaisseur (30, 32) qui est comprise entre 0,05 et 1,0 mm et qui est ramenée à la dimension originale, c'est-à-dire sans surépaisseur, par un procédé d'ablation, en particulier par fraisage, en éliminant l'excédent de masse de jointure ou de masse composite dans la zone de l'ourlet gingival (20), comme valeur cible, à proximité du joint de jonction/de liaison dans la zone du sillon gingival ou de l'ourlet gingival (20), l'excédent de masse de jointure/ composite, à l'endroit où au moins la base de la prothèse (12) et en particulier aussi les dents (10) sont exemptes de la surépaisseur (30, 32).

17. Produit intermédiaire d'une prothèse à fabriquer selon la revendication 16, **caractérisé en ce que** la zone de transition (36) entre la zone de la surépaisseur (30, 32) de la base de la prothèse (12) et la zone de la surépaisseur (30, 32) des dents (10) est remplie par l'excédent de masse de jointure/composite.
